# EUROPÄISCHE PATENTSCHRIFT

(11) **EP 2 689 085 B1**
(45) Veröffentlichungstag und Bekanntmachung des Hinweises auf die Patenterteilung: **18.05.2016**
(21) Anmeldenummer: 12714598.5
(22) Anmeldetag: 20.03.2012
(51) Int. Cl.: E05F 15/603, E05F 15/632, G01D 5/244, G01B 7/00, H02K 11/00

(54) **VORRICHTUNG UND VERFAHREN ZUM ANTRIEB EINER TÜR**
DEVICE AND PROCESS FOR DRIVING A DOOR
DISPOSITIF ET PROCÉDÉ POUR L'ENTRAINEMENT D'UNE PORTE

(30) Priorität: 14.04.2011 DE 102011007369
(43) Veröffentlichungstag der Anmeldung: 29.01.2014
(73) Patentinhaber: Siemens Aktiengesellschaft, 80333 München (DE)
(72) Erfinder: LUDWIG, Heinz, 30161 Hannover (DE); NOLTE, Uwe, 30890 Barsinghausen (DE); SONNTAG, Guido, 30989 Gehrden (DE)
(86) Internationale Anmeldenummer: PCT/EP2012/054871
(87) Internationale Veröffentlichungsnummer: WO 2012/139860

(56) Entgegenhaltungen:
- WO-A1-2010/108585
- DE-A1-102008 049 831
- US-A1- 2008 315 865

## Beschreibung

Die Erfindung betrifft ein elektrisches Antriebssystem für eine Tür sowie ein Verfahren zum Betrieb einer elektrisch angetriebenen Tür.

Elektromotorisch angetriebene Türsysteme sind aus dem Stand der Technik hinlänglich bekannt. Derartige Türsysteme werden in der Regel von einem rotatorisch arbeitenden Elektromotor angetrieben, der mittels eines Steuergerätes derart bestromt wird, dass die Tür in ihre gewünschte Position (AUF/ZU) bewegt wird. Zur Stromversorgung eines solchen Antriebssystems ist ein Netzteil vorgesehen, mit dem die netzseitige Versorgungsspannung in eine für das Türsteuergerät geeignete Spannung gewandelt wird.

Es ist ferner bekannt, dem Antriebssystem die Endpositionen der Tür, d.h. vollständig offen bzw. vollständig geschlossen, mit Hilfe geeignet positionierter Endschalter zur Kenntnis zu bringen. Alternativ ist es jedoch auch möglich und bekannt, den Elektromotor mit einem Geber zur Ermittlung der Rotorlage und der Drehzahl auszurüsten. Durch eine geeignete Auswertung der Rotorlage kann unter Berücksichtigung des im Antriebssystem verwirklichten Übersetzungsverhältnisses auf die Position der Tür rückgeschlossen werden. Hierbei können magnetische oder optische Gebersysteme eingesetzt werden.

Aus WO 2010/108585 A1 ist ein elektrisches Antriebssystem für eine Tür gemäß Oberbegriff des Anspruch 1 bekannt. Dieses umfasst ein Steuerungssystem für eine Trennwandanlage, wobei die Trennwandanlage über einzelne verfahrbare Trennwandelemente verfügt, die jeweils eine untergeordnete Steuerungseinheit aufweisen und zu einer geschlossenen Trennwand anordenbar sind, wobei jedes Trennwandelement in einer Führungsschiene verfahrbar ist und hierzu über einen Antriebsmotor zum Verfahren des Trennwandelements verfügt. Dabei sind die untergeordneten Steuerungseinheiten mit einer Positionsdatenerfassungseinheit ausgestattet, die unabhängig von einem Betriebszustand des Steuerungssystems, insbesondere bei einer energetischen Unterbrechung, die Position der Trennwandelemente erfassen.

Prinzipiell unterscheidet man zwischen Absolut- und Inkrementalgebern. Zur Bestimmung der Winkellage des Rotors der elektrischen Maschine bzw. der Rotorwelle, werden häufig sogenannte SINUS-COSIUS-Geber eingesetzt. Diese sind in der Lage, anhand zweier um 90° phasenverschobener Sinusschwingungen die Lage des Rotors im Bereich zwischen 0° und 360° absolut zu bestimmen. Bei so genannten Single-turn-Gebern ist die absolute Positionsbestimmung für genau eine Umdrehung möglich. Um eine mit einem Elektromotor durchgeführte Positions-änderung einer Tür verfolgen zu können, ist daher eine entsprechende Inkrementierung notwendig, da diese in der Regel zahlreiche Rotorwellenumdrehungen erfordert.

Um mit Hilfe derartiger Inkrementalgebersysteme die Absolutposition der Tür bestimmen zu können, muss zunächst eine Initialisierung durchgeführt werden. Dazu wird die Tür zunächst in eine bekannte Position gefahren, beispielsweise in eine der Endpositionen. Ausgehend von dieser Position kann dann jede weitere Position der Tür dadurch bestimmt werden, dass die Rotorwinkellage und die bereits durchgeführten vollständigen Rotorumdrehungen bestimmt werden.

Bei einer Trennung des Antriebssystems vom Versorgungsnetz geht eine so bestimmte Information über die Absolutposition der Tür jedoch verloren. Um nach dem erneuten Anlegen der Netzspannung wieder eine Positionsbestimmung mit Hilfe des Drehgebersystems durchführen zu können, muss die Tür zunächst wieder in die Initialisierungsposition zurückgefahren werden.

Der Erfindung liegt die Aufgabe zugrunde, die Energieeffizienz elektrischer Antriebssysteme für Türen zu verbessern.

Die Lösung dieser Aufgabe gelingt durch ein elektrisches Antriebssystem für eine Tür mit den Merkmalen gemäß Patentanspruch 1 sowie durch ein Verfahren zum Betrieb einer elektrisch angetriebenen Tür mit den Merkmalen gemäß Patentanspruch 6.

Vorteilhafte Ausführungsformen der Erfindung sind den abhängigen Patentansprüchen zu entnehmen.

Das erfindungsgemäße elektrische Antriebssystem umfasst
- ein Netzteil zur Stromversorgung des Antriebssystem aus einem Versorgungsnetz,
- einen Elektromotor zum Antrieb der Tür zwischen einer ersten und einer zweiten Endposition,
- eine Lagegebereinheit zur Bestimmung einer aktuellen Position der Tür,
- ein Steuergerät zur positionsabhängigen Ansteuerung des Elektromotors und
- einen Energiespeicher zur autarken Stromversorgung der Lagegebereinheit, wobei der Energiespeicher derart bemessen ist, dass Positionsänderungen der Tür während einer Trennung des Antriebssystems vom Versorgungsnetz mit der Lagegebereinheit erfasst werden können.

Das erfindungsgemäße elektrische Antriebssystem ermöglicht mit einer überraschend einfachen Maßnahme, nämlich dem Energiespeicher zur autarken Stromversorgung der Lagegebereinheit, eine erhebliche Energieeinsparung bei elektrisch gesteuerten Türen. Denn erst die vom Versorgungsnetz unabhängige Stromversorgung der Lagegebereinheit ermöglicht es, signifikant Energie dadurch zu sparen, dass elektrische Türsysteme beispielsweise in der Endstellung "ZU" solange vom Versorgungsnetz getrennt werden, bis eine erneute Anforderung zum Öffnen der Tür vorliegt.

Durch die Trennung des Antriebssystems vom Versorgungsnetz kann zunächst mal nicht unerheblich Stand-by-Leistung eingespart werden. Diese Tatsache ist von einer Vielzahl elektrischer Geräte hinlänglich bekannt. Würde man diese Maßnahmen jedoch bei einem herkömmlichen Türantriebssystem mit einem Encoder zur Positionsbestimmung in Erwägung ziehen, würde ein Großteil der eingesparten Energie wieder dadurch zunichte gemacht, dass eine langwierige Initialisierungsfahrt nach Anlegen der Netzspannung notwendig ist, um die Absolutpositionsbestimmung zu ermöglichen. Dies hätte nicht nur zusätzlichen Energieaufwand zur Folge, sondern würde auch zu einem nicht akzeptablen Verhalten der Tür aus Sicht des Betreibers führen.

Dadurch, dass der Energiespeicher derart bemessen ist, dass Positionsänderungen der Tür während eines Netzausfalls mit der Lagegebereinheit erfasst werden können, ist es nicht nur möglich, die zuletzt unter Netzbetrieb angefahrene Position der Tür weiter zu speichern sondern zusätzlich auch manuell eingeleitete Positionsverschiebungen zu registrieren, die beispielsweise manuell durchgeführt werden, während das Antriebssystem nicht aus dem Versorgungsnetz versorgt wird.

Erfindungsgemäß umfasst die Lagegebereinheit einen Encoder zur Ermittlung einer die Winkellage des Rotors der elektrischen Maschine repräsentierenden elektrischen Messgröße. Ein solcher Encoder kann auf optischen oder vorzugsweise auf magnetischen Messprinzipien beruhen. Vorzugsweise wird ein SINUS-COSIUS-Geber als Encoder eingesetzt, mit dem innerhalb einer vollständigen Rotorumdrehung die Absolutposition, d.h. der Winkel des Rotors zwischen 0° und 360°, erfassbar ist. Um einen möglichst gering dimensionierten und damit kostengünstigen Energiespeicher zur autarken Stromversorgungen verwenden zu können, wird vorteilhafter Weise ein Encoder mit einem sehr geringen Stand-by-Verbrauch eingesetzt. Dieser wird zur weiteren Energieverbrauchsminimierung in vorteilhafter Ausgestaltung der Erfindung in definierbaren Zeitabständen kurz für eine Messung aktiviert und anschließend wieder in den Ruhezustand versetzt.

In einer vorteilhaften Ausgestaltung der Erfindung umfasst die Lagegebereinheit eine Verarbeitungseinheit zur seriellen Auswertung der elektrischen Messgröße und zur Bestimmung der aktuellen Position der Tür. Für die Verarbeitungseinheit kann beispielsweise ein Mikrocontroller oder Mikroprozessor eingesetzt werden, der speziell auf Energieeffizienz getrimmt ist. Als Beispiel sei hier der Mikrocontroller vom Typ MSP430 genannt. Sobald das Antriebssystem nach einer Versorgungsunterbrechung wieder mit dem Versorgungsnetz verbunden wird, werden die Daten seriell vom Mikrocontroller bzw. Mikroprozessor zum Steuergerät des Elektromotors übertragen.

Gemäß der Erfindung kann der Stromverbrauch des Antriebssystems durch ein intelligentes Abtastmanagement weiter verringert werden. Hierbei umfasst das elektrische Antriebssystem Mittel zur Bestimmung einer Abtastfrequenz in Abhängigkeit einer aktuellen Rotorwinkelgeschwindigkeit, wobei besagte Abtastfrequenz sicherstellt, dass innerhalb einer vollständigen Rotorumdrehung mindestens zwei Winkellagemessungen des Rotors durchgeführt werden und wobei die so bestimmte Abtastfrequenz mit steigender Rotorwinkelgeschwindigkeit zunimmt. Bei einem Gebersystem, bei welchen sich die Rotorlage absolut innerhalb des Winkelbereiches von 0° bis 360° bestimmen lässt, müssen mindestens zwei Winkelbestimmungen pro Umdrehung des Rotors durchgeführt werden, um eine Absolutpositionsbestimmung der Tür auch noch nach mehreren Rotorumdrehungen durchführen zu können. Bei einer niedrigen Türgeschwindigkeit, die auch mit einer niedrigen Rotorwinkelgeschwindigkeit zwangsläufig verbunden ist, kann die Ermittlung dieser zwei Messwerte naturgemäß mit einer geringeren Abtastrate sichergestellt werden als bei hohen Tür- bzw. Rotorwinkelgeschwindigkeiten. Entsprechend ist es zweckmäßig und Grundgedanke der Erfindung, die Abtastfrequenz geschwindigkeitsabhängig zu variieren. Auf diese Art und Weise kann insbesondere im Stillstand viel Energie gespart werden. Die Abtastfrequenz für den Stillstand muss so gewählt werden, dass sichergestellt ist, dass die ersten beiden Messwerte beim Anfahren des Elektromotors noch während der ersten Umdrehung der Rotorwelle ermittelt werden. Mit zunehmender Rotordrehzahl wird die Abtastfrequenz anschließend erhöht.

In einer vorteilhaften Ausgestaltung des elektrischen Antriebssystems umfasst dieses Mittel zur Erfassung der im Energiespeicher vorhandenen Energiemenge und Mittel zum automatischen Aufschalten des Versorgungsnetzes auf das Antriebssystem im Falle einer für die Positionsbestimmung unzureichenden Energiemenge. Hierdurch kann sichergestellt werden, dass stets genügend Energie zur Lagebestimmung im Energiespeicher vorhanden ist.

Die Aufgabe wird ferner durch ein Verfahren zum Betrieb einer elektrisch angetriebenen Tür gelöst,
- wobei der Elektromotor positionsabhängig angesteuert wird,
- wobei die elektrisch angetriebene Tür in einer Ruheposition vom Versorgungsnetz getrennt wird,
- wobei eine im vom Netz getrennten Zustand durchgeführte Positionsänderung der Tür von einer Lagegebereinheit, die von einem Energiespeicher autark mit Strom versorgt wird, erfasst wird und
- wobei die Positionsänderung nach einem erneuten Anlegen der Netzspannung für die positionsabhängige Ansteuerung des Elektromotors verwendet wird.

Bei diesem Verfahren wird die elektrisch angetriebene Tür so betrieben, dass ein Maximum an Energie eingespart werden kann. Sobald die Tür eine Endposition erreicht hat, vorzugsweise die geschlossene Position, wird die Antriebseinheit vom Versorgungsnetz getrennt, um Stand-by-Energie zu sparen. Wird jedoch die Tür, beispielsweise händisch verschoben, während das Antriebssystem vom Netz getrennt ist, kann die dadurch hervorgerufene Positionsänderung trotzdem mit der Lagegebereinheit aufgrund des Energiespeichers erfasst werden. Sobald anschließend die Netzspannung wieder an das Antriebssystem angelegt wird, wird die aktuelle Position der Tür dem Türsteuergerät zur Verfügung gestellt, so dass eine erneute Initialisierung überflüssig wird.

Als Energiespeicher kann eine Batterie, ein Akku oder auch ein Doppelschichtkondensator ausreichender Größe verwendet werden. Auch kann die Versorgung z.B. über zwei elektrische Energiespeicher erfolgen, von denen immer einer Entladen und der andere Geladen wird. Der Energiespeicher sollte so dimensioniert werden, dass ein Datenerhalt von mindestens 72 Stunden möglich ist, damit ein Abschalten der Netzversorgung auch über ein Wochenende hinweg noch nicht zu einer neuen Initialisierungsfahrt führt.

Um möglichst viel Energie im Stand-by-Betriebszustand einsparen zu können, wird das Versorgungsnetzes bei Vorliegen eines Kommandos zum Öffnen oder Schließen der Tür vorteilhafterweise automatisch auf das Antriebssystem aufgeschaltet und das Antriebssystem vorteilhafterweise automatisch vom Versorgungsnetz getrennt, sobald das Öffnen oder Schließen der Tür beendet ist.

Im Folgenden wird die Erfindung anhand der in den Figuren dargestellten Ausführungsbeispiele näher beschrieben und erläutert. Es zeigen:
- FIG 1: eine Tür mit einem elektrischen Antriebssystem gemäß einer Ausführungsform der Erfindung und
- FIG 2: einen Elektromotor mit integrierter Lagegebereinheit nach einer Ausführungsform der Erfindung.

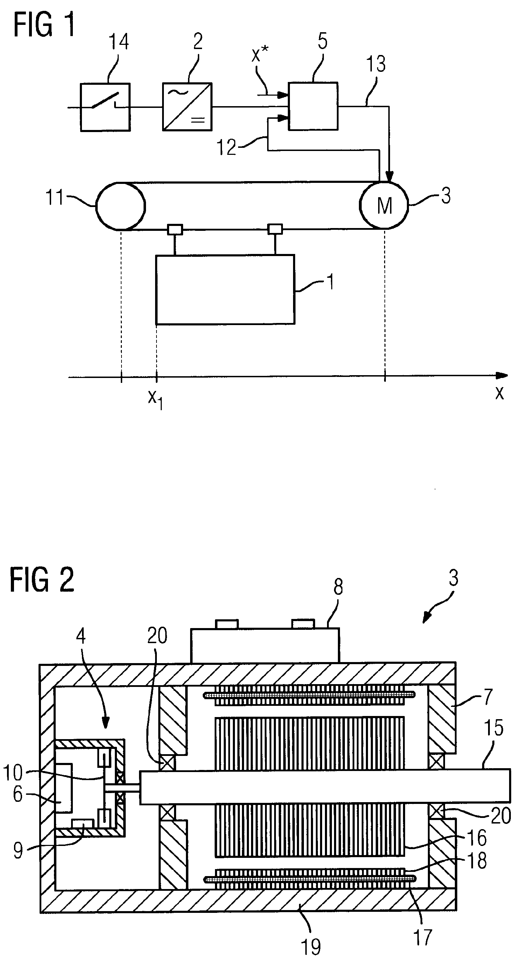

FIG 1 zeigt eine Tür 1 mit einem elektrischen Antriebssystem gemäß einer Ausführungsform der Erfindung. Die Tür 1 ist als Schiebetür ausgeführt und kann über einen Elektromotor 3 in x-Richtung zum Öffnen und Schließen bewegt werden. Wie hier schematisch dargestellt treibt der Elektromotor 3 einen über eine Umlenkrolle 11 gespannten Riemen an, der mit der Tür 1 verbunden ist. Auf diese Art und Weise wird die rotatorische Bewegung des Elektromotors 3 in eine translatorische Bewegung der Tür 1 umgesetzt.

Es sei an dieser Stelle erwähnt, dass die Erfindung selbstverständlich nicht nur im Zusammenhang mit Schiebetüren und damit verbundenen translatorischen Bewegungen zum Einsatz kommen kann, sondern ebenfalls bei Schwenk- oder Drehtüren eingesetzt werden kann, bei denen die Tür beim Öffnen und Schließen eine Kreisbogenbahn durchläuft.

Als Elektromotor 3 kann jede Art von elektrischen Maschinen eingesetzt werden. Bevorzugt wird ein Gleichstrommotor oder ein EC-Motor eingesetzt. Es kommen jedoch nicht nur rotatorisch angetriebene Maschinen in Frage. Vielmehr ist es auch denkbar-und von der Erfindung umfasst, den Elektromotor als Linearmotor auszuführen und somit die in FIG 1 dargestellte Einheit aus Umlenkrolle 11 und Riemen, die der Umwandlung der rotatorischen Bewegung des Motors in eine translatorische Bewegung der Tür dient, entbehrlich zu machen.

Die in dem Beispiel dargestellte rotatorisch arbeitende elektrische Maschine 3 wird durch ein Steuergerät 5 zum Öffnen und Schließen der Tür angesteuert. Das Steuergerät 5 weist hierfür beispielsweise zwei oder drei Halbbrücken auf, die einen einem Drehmomentsollwert entsprechenden Maschinenstrom 13 in die elektrische Maschine 3 einprägen.

Die Stromversorgung des Antriebssystems geschieht über ein Netzteil 2, mit welchem die netzseitige Wechselspannung in eine Gleichspannung geeigneten Niveaus umgewandelt wird. Beispielsweise wird eine Wechselspannung von 230 Volt in eine Gleichspannung von 40 Volt zur Versorgung des Steuergerätes 5 umgewandelt.

Der Elektromotor 3 umfasst eine in FIG 1 nicht dargestellte Lagegebereinheit. Diese Lagegebereinheit, auf die im Zusammenhang mit der Beschreibung von FIG 2 noch näher eingegangen wird, meldet dem Steuergerät 5 ein elektrisches Signal 12. Dieses elektrische Signal 12 stellt die Position x₁ der Tür 1 bezüglich der Endpositionen ("AUF", "ZU") dar. Das Signal 12 kann beispielsweise direkt die Position x₁ wiedergeben. Hierzu wird in der Lagegebereinheit aus dem vom Lagegeber ermittelten Signal direkt die Position x₁ ermittelt. Der Lagegeber, der mit der Rotorwelle der elektrischen Maschine 3 verknüpft ist, meldet zunächst Informationen, die den von der Rotorwelle zurückgelegten Weg ausgehend von einer Referenzposition darstellen. Dieser Weg der Rotorwelle ist über einen dem System inhärentes Übersetzungsverhältnis mit einer Wegstrecke x der Tür 1 verbunden. Entsprechend kann die Positionsinformation x sowohl bereits in der Lagegebereinheit berechnet werden als auch erst vom Steuergerät 5.

Das Steuergerät 5 erhält vom Benutzer in irgendeiner Weise ein Sollpositionssignal x* für die Tür. In der Regel erzeugt der Benutzer mit einem Pushbutton o.Ä. den Befehl "Tür auf" oder "Tür zu". Der Befehl "Tür auf" erzeugt ein Sollpositionssignal x* für die Tür, welches der vollständig geöffneten Tür entspricht. Aus der Abweichung des Sollwertes x* und der aktuellen Position x₁ der Tür 1 kann das Steuergerät 5 einen in den Elektromotor 3 einzuprägenden Strom 13 bestimmen und so die Tür einem gewünschten Bewegungsprofil entsprechend in die geöffnete Stellung fahren.

Die Besonderheit des hier dargestellten elektrischen Antriebssystems besteht nun darin, dass die Ermittlung der aktuellen Position x der Tür 1 auch dann möglich ist, wenn das Antriebssystem über den dargestellten Schalter 14 vom Netz zur Reduktion der Stand-by-Leistung getrennt ist. Dies ist insbesondere dann vorteilhaft, wenn die elektrisch angetriebene Tür 1 verhältnismäßig selten geöffnet bzw. geschlossen wird. Beispielsweise ist der Schalter 14 mit einem Betätigungselement verknüpft, über das der Benutzer den Befehl zum Öffnen oder zum Schließen der Tür 1 gibt. Nur wenn eine solche Befehlsmeldung vorliegt, wird das Antriebssystem an das Versorgungsnetz angekoppelt. Auf diese Art und Weise lässt sich erheblich Energie einsparen.

Bei einem herkömmlichen Antriebssystem hätte diese Maßnahme jedoch zur Folge, dass zunächst eine Initialisierungsfahrt der Tür 1 durchgeführt werden muss, um die Positionsinformationen 12 wieder an das Steuergerät 5 melden zu können. Dies gilt insbesondere dann, wenn während der Netztrennung die Position der Tür 1 verändert wurde.

Um dies zu verhindern, wird die Lagegebereinheit der elektrischen Maschine 3 von einem Energiespeicher beispielsweise in Form eines Akkumulators gespeist. Entsprechend können auch Positionsänderungen der Tür 1, die bei geöffnetem Schalter 14 beispielsweise per Hand von einem Benutzer durchgeführt werden, erfasst werden, und stehen nach erneutem Aufschalten des Versorgungsnetzes unmittelbar zur Verfügung.

Die beschriebene Lageerkennung während einer Trennung der Antriebseinheit vom Netz setzt voraus, dass der Energiespeicher genügend Reserven besitzt. Als Energiespeicher kann ferner auch ein Kondensator, insbesondere ein Doppelschichtkondensator, Super-Cap, Ultra-Cap, Gold-Cap etc. eingesetzt werden.

Unabhängig vom Typ des Kondensators ist es vorteilhaft, wenn der Schalter 14 automatisch geschlossen wird, wenn der eingesetzte Energiespeicher nicht mehr genügend Reserven hat, um eine Lagererfassung im vom Netz getrennten Betrieb zu ermöglichen.

FIG 2 zeigt einen Elektromotor 3 mit integrierter Lagegebereinheit 4 nach einer Ausführungsform der Erfindung. Bei dem Elektromotor 3 handelt es sich um einen sinuskommutierten EC-Motor. Auf einer Welle 15 des Elektromotors 3 ist ein Rotorblechpaket 16 aufgeschrumpft, auf dem zur Erzeugung eines Erregerfeldes Permanentmagnete aufgebracht sind. Ein Ständerblechpaket 18 enthält eine Ankerwicklung 17, die mit dem Maschinenstrom gespeist wird, um die vom Benutzer vorgegebenen Sollpositionen der Tür 1 anzufahren. Der Elektromotor 3 wird über einen Klemmkasten 8 mit einer Gleichspannung versorgt, die von dem in FIG 1 dargestellten Netzgerät 2 zur Verfügung gestellt wird.

Der Rotor der elektrischen Maschine befindet sich zusammen mit einer Lagegebereinheit 4 in einem Maschinengehäuse 19. Die Lagegebereinheit 4 umfasst einen Sinus-Cosius-Geber 10, der mit der Rotorwelle 15 verbunden ist. Die Rotorwelle 15, die über Kugellager 20 und Lagerschilde 7 innerhalb des Gehäuses 19 gelagert ist, treibt somit ein rotierendes Element des Encoders mit der Rotorwinkelgeschwindigkeit an.

Innerhalb der Lagegebereinheit 4 befindet sich ein seriell arbeitender Mikrocontroller vom Typ MSP430, der die Daten des magnetisch arbeitenden Encoders seriell auswertet. Bei diesem Controller handelt es sich um eine besonders stromsparende Variante.

Die Lagegebereinheit 4 umfasst ferner einen Energiespeicher 6 in Form eines Akkumulators. Mit diesem werden die Elemente der Lagegebereinheit 4, d.h. der Encoder 10 und der Mikrocontroller 9 mit Strom versorgt und zwar unabhängig von der Versorgungsnetzspannung. Um auf diese Weise auch im vom Netz getrennten Zustand möglichst lange die Lagegebereinheit 4 mit Energie versorgen zu können, ist die Verarbeitungseinheit 9 besonders stromsparend ausgeführt.

Ferner wird die maximale netzunabhängige Versorgungsdauer der Lagegebereinheit 4 durch ein intelligentes Abtastmanagement erheblich erhöht. Der Encoder 10 ist in der Lage, die Lage der Rotorwelle 15 im Bereich von 0° und 360° zu jedem Abtastzeitpunkt auszugeben. Um Rückschlüsse auf die absolute Position der Tür 1 geben zu können, muss jedoch auch die Anzahl der vollständigen Wellenumdrehungen mitgezählt werden. Um dies gewährleisten zu können, sind mindestens zwei Abtastzeitpunkte des Encoders bei einer vollen Umdrehung der Rotorwelle 15 notwendig. Bezüglich der Abtastfrequenz heißt das, dass die Abtastfrequenz mit steigender Maschinendrehzahl zunehmen muss, wenn man stets bemüht ist, mit möglichst wenigen Abtastzeitpunkten auszukommen. Bei niedriger Maschinendrehzahl können die Abtastzeitpunkte zeitlich gesehen weiter auseinander liegen als bei einer hohen Maschinendrehzahl. Ein entsprechendes Management wird mit Hilfe des Mikrocontrollers innerhalb der Lagegebereinheit 4 verwirklicht. Zwischen den Abtastzeitpunkten wird die Lagegebereinheit 4 in einen Ruhezustand versetzt. Durch Auswahl einer Encoderplatine mit besonders geringem Stand-by-Verbrauch kann hierdurch ein erheblicher Energieanteil eingespart werden.

Erst die hier dargestellte vom Netz unabhängige Stromversorgung des Encoders ermöglicht es, elektrische Türsysteme während der Benutzungspausen vom Netz zu trennen und somit in einem nennenswerten Maße Energie einzusparen. Erst dadurch, dass die Erfindung erneute Initialisierungsfahrten nach Beaufschlagung der Netzversorgung überflüssig macht, kann auch eine Kundenakzeptanz bei einem solchen System erzielt werden. Vorteilhafterweise könnte hierbei der in FIG 1 dargestellte Schalter 14 derart vom Steuergerät 5 angesteuert werden, dass er bei einem Fahrkommando automatisch schließt und am Fahrende automatisch wieder öffnet, um das Antriebssystem vom Netz zu trennen. Hierdurch lässt sich ein Maximum an Stand-by-Energie einsparen, wobei Initialisierungsfahrten beim Wiedereinschalten dennoch entbehrlich sind.

## Patentansprüche

1. Elektrisches Antriebssystem für eine Tür (1) mit
- einem Netzteil (2) zur Stromversorgung des Antriebssystem aus einem Versorgungsnetz,
- einem Elektromotor (3) zum Antrieb der Tür (1) zwischen einer ersten und einer zweiten Endposition,
- einer Lagegebereinheit (4) zur Bestimmung einer aktuellen Position der Tür (1),
- einem Steuergerät (5) zur positionsabhängigen Ansteuerung des Elektromotors (3) und
- einem Energiespeicher (6) zur autarken Stromversorgung der Lagegebereinheit (4), wobei der Energiespeicher (6) derart bemessen ist, dass Positionsänderungen der Tür (1) während einer Trennung des Antriebssystems vom Versorgungsnetz mit der Lagegebereinheit (4) erfasst werden können,
- wobei die Lagegebereinheit (4) einen Encoder (10) zur Ermittlung einer die Winkellage des Rotors der elektrischen Maschine (3) repräsentierenden elektrischen Messgröße umfasst,
**dadurch gekennzeichnet, dass** das elektrische Antriebssystem Mittel zur Bestimmung einer Abtastfrequenz in Abhängigkeit einer aktuellen Rotorwinkelgeschwindigkeit umfasst, wobei besagte Abtastfrequenz sicherstellt, dass innerhalb einer vollständigen Rotorumdrehung mindestens zwei Winkellagemessungen des Rotors durchgeführt werden und wobei die so bestimmte Abtastfrequenz mit steigender Rotorwinkelgeschwindigkeit zunimmt, um mit möglichst wenigen Abtastzeitpunkten auszukommen.

2. Elektrisches Antriebssystem nach Anspruch 1, wobei die Lagegebereinheit (4) eine Verarbeitungseinheit (9) zur seriellen Auswertung der elektrischen Messgröße und zur Bestimmung der aktuellen Position der Tür (1) umfasst.

3. Elektrisches Antriebssystem nach einem der vorhergehenden Ansprüche mit Mitteln zur Erfassung der im Energiespeicher (6) vorhanden Energiemenge und Mitteln zum automatischen Aufschalten des Versorgungsnetzes auf das Antriebssystem im Falle einer für die Positionsbestimmung unzureichenden Energiemenge.

4. Tür mit einem elektrischen Antriebssystem nach einem der Ansprüche 1 bis 3.

5. Verfahren zum Betrieb einer elektrisch angetriebenen Tür (1), bei dem die Tür (1) mittels eines Elektromotors (3) zwischen einer ersten und einer zweiten Endposition bewegt wird,
- wobei der Elektromotor positionsabhängig angesteuert wird,
- wobei die elektrisch angetriebene Tür (1) in einer Ruheposition vom Versorgungsnetz getrennt wird,
- wobei eine im vom Netz getrennten Zustand durchgeführte Positionsänderung der Tür (1) von einer Lagegebereinheit (4), die von einem Energiespeicher (6) autark mit Strom versorgt wird, erfasst wird und
- wobei die Positionsänderung nach einem erneuten Anlegen der Netzspannung für die positionsabhängige Ansteuerung des Elektromotors (3) verwendet wird,
- wobei mit einem Encoder (10) eine die Winkellage des Rotors der elektrischen Maschine (3) repräsentierenden elektrischen Messgröße ermittelt wird,
**dadurch gekennzeichnet, dass** eine Abtastfrequenz in Abhängigkeit einer aktuellen Rotorwinkelgeschwindigkeit bestimmt wird, wobei besagte Abtastfrequenz sicherstellt, dass innerhalb einer vollständigen Rotorumdrehung mindestens zwei Winkellagemessungen des Rotors durchgeführt werden und wobei die so bestimmte Abtastfrequenz mit steigender Rotorwinkelgeschwindigkeit zunimmt, um mit möglichst wenigen Abtastzeitpunkten auszukommen.

6. Verfahren nach Anspruch 5, wobei das Versorgungsnetz bei Vorliegen eines Kommandos zum Öffnen oder Schließen der Tür (1) automatisch auf das Antriebssystem aufgeschaltet wird und das Antriebssystem automatisch vom Versorgungsnetz getrennt wird, sobald das Öffnen oder Schließen der Tür (1) beendet ist.

## Claims

1. Electrical drive system for a door (1) comprising
- a power supply unit (2) for supplying the drive system with power from an electricity supply grid,
- an electric motor (3) for driving the door (1) between a first and a second end position,
- a position encoder unit (4) for determining a current position of the door (1),
- a control device (5) for position-dependent actuation of the electric motor (3), and
- an energy store (6) for independently supplying the position encoder unit (4) with power, the energy store (6) being dimensioned such that changes in the position of the door (1) during a disconnection of the drive system from the electricity supply grid can be detected by means of the position encoder unit (4),
- wherein the position encoder unit (4) comprises an encoder (10) for determining an electrical measurement variable representing the angular position of the rotor of the electrical machine (3),
**characterised in that** the electrical drive system comprises means for determining a sampling frequency as a function of a current rotor angular velocity, wherein said sampling frequency ensures that at least two angular position measurements of the rotor are performed within one complete revolution of the rotor and wherein the thus determined sampling frequency increases as the rotor angular velocity increases, in order to reduce the number of sampling instants to a minimum.

2. Electrical drive system according to claim 1, wherein the position encoder unit (4) comprises a processing unit (9) for serially evaluating the electrical measurement variable and for determining the current position of the door (1).

3. Electrical drive system according to one of the preceding claims, comprising means for measuring the amount of energy present in the energy store (6) and means for automatically connecting the electricity supply grid to the drive system in the event that the amount of energy available for determining the position is inadequate.

4. Door having an electrical drive system according to one of claims 1 to 3.

5. Method for operating an electrically driven door (1) in which the door (1) is moved between a first and a second end position by means of an electric motor (3),
- wherein the electric motor is actuated as a function of position,
- wherein the electrically driven door (1) is disconnected from the electricity supply grid in an idle position,
- wherein a change in the position of the door (1) performed in the state disconnected from the grid is detected by a position encoder unit (4) which is independently supplied with power by an energy store (6), and
- wherein the change in position is used for the position-dependent actuation of the electric motor (3) after the grid voltage is reapplied,
- wherein an electrical measurement variable representing the angular position of the rotor of the electrical machine (3) is determined by means of an encoder (10),
**characterised in that** a sampling frequency is determined as a function of a current rotor angular velocity, wherein said sampling frequency ensures that at least two angular position measurements of the rotor are performed within one complete revolution of the rotor and wherein the thus determined sampling frequency increases as the rotor angular velocity increases, in order to reduce the number of sampling instants to a minimum.

6. Method according to claim 5, wherein the electricity supply grid is connected to the drive system automatically when a command for opening or closing the door (1) is present and the drive system is automatically disconnected from the electricity supply grid as soon as the opening or closing of the door (1) is terminated.

## Revendications

1. Système d'entraînement électrique d'une porte (1) comprenant
- une partie (2) de réseau pour alimenter en courant le système d'entraînement à partir d'un réseau d'alimentation,
- un moteur (3) électrique pour entraîner la porte (1) entre une première et une deuxième positions d'extrémité,
- une unité (4) d'indication de position pour la détermination d'une position présente de la porte ( 1 ),
- un appareil ( 5 ) de commande pour la commande du moteur ( 3 ) électrique en fonction de la position et
- un accumulateur ( 6 ) d'énergie pour l'alimentation en courant en autarcie de l'unité ( 4 ) d'indication de position, l'accumulateur ( 6 ) d'énergie étant dimensionné de manière à pouvoir détecter par l'unité (4) d'indication de position des variations de position de la porte ( 1 ) pendant que le système d'entraînement est séparé du réseau d'alimentation,
- dans lequel l'unité ( 4 ) d'indication de position comprend un codeur ( 10 ) pour la détermination d'une grandeur de mesure électrique représentant la position angulaire du rotor de la machine ( 3 ) électrique,
**caractérisé en ce que** le système d'entraînement électrique comprend des moyens de détermination d'une fréquence d'échantillonnage en fonction d'une vitesse angulaire présente du rotor, ladite fréquence d'échantillonnage assurant que, dans une rotation complète du rotor, au moins deux mesures de position angulaire du rotor sont effectuées et la fréquence d'échantillonnage ainsi définie augmentant au fur et à mesure qu'augmente la vitesse angulaire du rotor afin d'y arriver avec aussi peu d'instants d'échantillonnage que possible.

2. Système d'entraînement électrique suivant la revendication 1, dans lequel l'unité (4) d'indication de position comprend une unité ( 9 ) de traitement pour l'exploitation en série de la grandeur de mesure électrique et pour la détermination de la position présente de la porte ( 1 ) .

3. Système d'entraînement électrique suivant la revendication 1, comprenant des moyens de détection de la quantité d'énergie présente dans l'accumulateur ( 6 ) d'énergie et des moyens de branchement automatique du réseau d'alimentation sur le système d'entraînement si la quantité d'énergie est insuffisante pour la détermination de position.

4. Porte ayant un système d'entraînement électrique, suivant l'une des revendications 1 à 3.

5. Procédé pour faire fonctionner une porte ( 1 ) entraînée électriquement, dans lequel on déplace la porte ( 1 ) au moyen d'un moteur ( 3 ) électrique entre une première et une deuxième positions d'extrémité,
- dans lequel on commande le moteur électrique en fonction de la position,
- dans lequel on sépare la porte (1) entraînée électriquement en une position de repos du réseau d'alimentation,
- dans lequel on détecte une variation, effectuée à l'état séparé du réseau, de la porte (1) par une unité (4) indiquant la position, qui est alimentée en courant en autarcie par un accumulateur ( 6 ) d'énergie et
- dans lequel on utilise la variation de position après avoir appliqué à nouveau la tension du réseau pour commander le moteur ( 3 ) électrique en fonction de la position,
- dans lequel on détermine par un codeur ( 10 ) une grandeur de mesure électrique représentant la position angulaire du rotor de la machine ( 3 ) électrique,
**caractérisé en ce qu'**on détermine une fréquence d'échantillonnage en fonction d'une vitesse angulaire présente du rotor, ladite fréquence d'échantillonnage assurant que, dans une rotation complète du rotor, au moins deux mesures de position angulaire du rotor sont effectuées et la fréquence d'échantillonnage ainsi définie augmentant au fur et à mesure qu'augmente la vitesse angulaire du rotor afin d'y arriver avec aussi peu d'instants d'échantillonnage que possible.

6. Procédé suivant la revendication 5, dans lequel on branche le réseau d'alimentation, en présence d'une instruction d'ouverture ou de fermeture de la porte ( 1 ), automatiquement sur le système d'entraînement et on sépare le système d'entraînement automatiquement du réseau d'alimentation dès que l'ouverture ou la fermeture de la porte (1) est terminée.
